# EUROPEAN PATENT APPLICATION

(11) **EP 4 610 322 A1**
(43) Date of publication of application: **03.09.2025**
(21) Application number: 23882528.5
(22) Date of filing: 19.10.2023
(51) Int. Cl.: C09D 201/00, C08L 83/05, C08L 83/07, C09D 5/02, C09D 7/65, C09D 175/04

(54) **COATING AGENT**

(30) Priority: 28.10.2022 JP 2022173376
(71) Applicant: SHIN-ETSU CHEMICAL CO., LTD., Tokyo 1000005 (JP)
(72) Inventor: INOKUCHI, Yoshinori, Annaka-shi, Gunma 379-0224 (JP)
(74) Representative: V.O.
(86) International application number: PCT/JP2023/037856
(87) International publication number: WO 2024/090323

(57) **Abstract**

[Problem]

An object of the present invention is to provide a coating agent, particularly an aqueous coating agent for rubber, that forms a coating film with excellent surface smoothness and abrasion resistance even against friction under high load.

[Solution]

A coating agent comprising, (A) a film-forming resin, (B) a silicone rubber particle that is an addition reaction product of a curable liquid silicone composition comprising the following components (B-1), (B-2), and (B-3) :
(B-1) a diorganopolysiloxane having two or more alkenyl groups in one molecule;
(B-2) an organopolysiloxane resin comprising R¹₃SiO_{1/2} and SiO_{4/2} units, wherein the molar ratio of R¹₃SiO_{1/2} units relative to SiO_{4/2} units is 0.60 or more to 1.7 or less, R¹ is, independently of each other, a substituted or unsubstituted monovalent hydrocarbon group having 1 to 30 carbon atoms and having no alkenyl group, or an alkenyl group having 2 to 8 carbon atoms, and at least one of all the R¹ groups is an alkenyl group; and
(B-3) an organohydrogen polysiloxane having two or more hydrogen atoms bonded to silicon atoms, referred to as a SiH group, in one molecule;
and water, wherein an amount of component (B-2) is 1.0 to 65 parts by mass, relative to 100 parts by mass of the total amount of components (B-1), (B-2), and (B-3), and the mass ratio of component (A) to component (B) is 85:15 to 25:75.

## Description

### TECHNICAL FIELD

The present invention relates to a coating agent and more specifically relates to an aqueous coating agent for rubber materials that imparts a cured film with excellent abrasion resistance and surface smoothness to a substrate comprising a rubber material.

### BACKGROUND OF THE INVENTION

Conventionally, in order to impart surface smoothness, abrasion resistance, water repellency, stain resistance, and anti-adhesive properties to various kinds of rubber, their surfaces are coated with a silicone-based aqueous composition or a urethane-based aqueous composition and then cured.

In order to improve surface smoothness and abrasion resistance, Patent Literature 1 proposes blending spherical silicone rubber particles into an aqueous silicone-based composition having film-forming properties. The light-scattering properties of the particles can also impart a matte finish to a coating film. However, abrasion resistance against friction under load was insufficient.

### PRIOR LITERATURES

### PATENT LITERATURES

Patent Literature 1: Japanese Patent Application Laid-Open No. Hei 11-49955/1999

The present invention has been made in consideration of the circumstances above and has an object to provide a coating agent, particularly an aqueous coating agent for rubber, that forms a coating film with excellent surface smoothness and abrasion resistance even against friction under high load.

### DISCLOSURE OF THE INVENTION

### PROBLEMS TO BE SOLVED BY THE INVENTION

As a result of intensive studies to achieve the object above, the present inventor theorized that silicone rubber particles in coating films would break under load. The inventor found that the object above is achieved by blending particles of silicone rubber with high rubber strength and high elongation into a coating agent, resulting in the completion of the present invention.

Specifically, the inventor found that the object above is achieved by blending silicone rubber particles into a coating agent comprising a film-forming resin, in which the silicone rubber particles are products of an addition reaction of a silicone composition comprising a diorganopolysiloxane having an alkenyl group, an organohydrogen polysiloxane having a hydrogen atom bonded to a silicon atom as raw materials and further an organopolysiloxane resin having an alkenyl group.

That is, the present invention provides the following coating agent.

A coating agent comprising,
(A) a film-forming resin,
(B) a silicone rubber particle that is an addition reaction product of a curable liquid silicone composition comprising the following components (B-1), (B-2), and (B-3) :
   (B-1) a diorganopolysiloxane having two or more alkenyl groups in one molecule;
   (B-2) an organopolysiloxane resin comprising R¹₃SiO_{1/2} and SiO_{4/2} units,
   wherein the molar ratio of R¹₃SiO_{1/2} units relative to SiO_{4/2} units is 0.60 or more to 1.7 or less, R¹ is, independently of each other, a substituted or unsubstituted monovalent hydrocarbon group having 1 to 30 carbon atoms and having no alkenyl group, or an alkenyl group having 2 to 8 carbon atoms, and at least one of all the R¹ groups is an alkenyl group; and
   (B-3) an organohydrogen polysiloxane having two or more hydrogen atoms bonded to silicon atoms, referred to as a SiH group, in one molecule;

and water,
wherein an amount of component (B-2) is 1.0 to 65 parts by mass, relative to 100 parts by mass of the total amount of components (B-1), (B-2), and (B-3), and the mass ratio of component (A) to component (B) is 85:15 to 25:75.

Furthermore, the present invention provides a coating agent further having at least one characteristic selected from the following components [1] to [9]:
[1] (B-1) the diorganopolysiloxane has an amount of alkenyl groups of 0.0025 to 0.034 mol/100 g, (B-2) the organopolysiloxane resin has an amount of alkenyl groups of 0.001 mol/100 g or more, and (B-3) the organohydrogen polysiloxane has an amount of SiH groups of 0.030 to 1.30 mol/100 g;
[2] the coating agent, wherein the amount of (A) the film-forming resin is 0.5 to 59 parts by mass, the amount of (B) the silicone rubber particles is 0.3 to 52 parts by mass, and the amount of water is 30 to 98 parts by mass, relative to 100 parts by mass of the coating agent;
[3] the coating agent, wherein the silicone rubber particles are spherical and have a volume average particle size of 0.5 µm to 50 µm;
[4] the coating agent comprising an emulsion of the film-forming resin;
[5] the coating agent, wherein the film-forming resin is at least one kind selected from the groups consisting of a urethane resin, a vinyl chloride resin, an acrylic resin, a silicone-acrylic copolymer resin, a silicone-urethane copolymer resin, an acrylonitrile-butadiene-styrene-based resin, a polyester-based resin, an amide-based resin, and a silicone rubber;
[6] the coating agent, wherein the film-forming resin is at least one kind selected from the groups consisting of a urethane resin, a silicone rubber, and a silicone-urethane copolymer resin;
[7] the coating agent comprising a water dispersion of the silicone rubber particle and an amount of the silicone rubber particle is 5 % to 70 % by mass, based on a mass of the water dispersion;
[8] the coating agent, wherein the silicone rubber particles are composed of a silicone rubber having an elongation at break of 15 % or more for a dumb-bell-shaped type 3 test piece as determined according to the test method defined in the Japanese Industrial Standards (JIS) K 6251: 2017, for a 1 mm thick rubber sheet subjected to a heat treatment at 150 °C for 30 minutes, and a tensile strength at break of 0.9 MPa or more as determined according to the test method defined in JIS K 6251: 2017; and
[9] the coating agent, which is a coating agent for rubber materials.

### EFFECTS OF THE INVENTION

The coating agent of the present invention forms films with excellent surface smoothness and abrasion resistance even against friction under high load. Therefore, the aqueous coating agent for rubber of the present invention is used for the purpose of improving rubber roller slipperiness, abrasion resistance, and stain resistance as well as preventing adhesion to O-rings, packings, gaskets, and the like. In particular, the aqueous coating agent is useful for improving abrasion resistance and slidability as well as preventing squeaky sounds in weatherstrip rubber around car doors and trucks.

### DETAILED DESCRIPTION OF THE INVENTION

The present invention is described in detail below.

### [Component (A)]

Component (A) of the present invention is an emulsion of a film-forming resin. The film-forming resin refers to a resin that forms a solid film through the evaporation of water in the emulsion or a heat treatment.

The amount of solid contents contained in the emulsion of the resin (A) above is not particularly limited, but is preferably 5 % to 80 % by mass, or more preferably 20 % to 60 % by mass, relative to the mass of the emulsion. The dispersion medium of the emulsion is preferably water.

The emulsion of the resin (A) above may contain an anionic surfactant or a nonionic surfactant. When the resin is self-emulsifiable, a surfactant may not be contained in the emulsion.

In order for the emulsion of the resin (A) above to have film-forming capabilities, the volume average particle size of the resin is preferably small. Specifically, the volume average particle size is preferably 5 nm to 1,000 nm, more preferably 50 nm to 500 nm, or even more preferably 100 nm to 400 nm. In the present invention, the volume average particle size of the resin is determined using a laser diffraction/scattering particle size measuring device.

The film formed from the resin emulsion above preferably has an elongation at break of 50 % or more and a tensile strength at break of 1.0 MPa or more. A low elongation at break causes the film to crack when the coated substrate rubber is deformed. The elongation at break is more preferably 100 % or more, or even more preferably 200 % or more. A low tensile strength at break causes the abrasion resistance of the film of the coating agent to decrease. The tensile strength at break is more preferably 1.5 MPa or more or even more preferably 2.0 MPa or more.

In the present invention, the elongation at break and tensile strength at break refer to values determined using the test method according to JIS K 6251 for a 1 mm thick dumb-bell-shaped type 3 test piece subjected to a heat treatment at 150 °C after removing water by evaporation.

The emulsion of film-forming resin may be a conventionally known film-forming resin. Examples thereof include emulsions of a urethane resin, a vinyl chloride resin, an acrylic resin, a silicone-acrylic copolymer resin, a silicone-urethane copolymer resin, an acrylonitrile-butadiene-styrene-based resin, a polyester-based resin, an amide-based resin, a silicone rubber, and the like. A urethane resin emulsion, a silicone rubber emulsion, or a silicone-urethane copolymer resin is preferable. Two or more kinds of emulsions of different types of resins may be used in combination.

### [Component (B)]

Component (B) of the present invention is a water dispersion of silicone rubber particles. Component (B) does not have film-forming capabilities.

The particles in the water dispersion of silicone rubber particles (B) are preferably spherical. In the present specification, "spherical" refers to not only true spheres but also deformed spheres whose major axis length relative to minor axis length (aspect ratio), on average, is conventionally within the range of 1.0 to 4.0, preferably 1.0 to 2.0, more preferably 1.0 to 1.6, or even more preferably 1.0 to 1.4. The shape of the particles can be confirmed by observing the particles using an optical microscope, an electron microscope, or the like. The shape of the particles may also be determined using a dynamic image analysis particle shape analyzer.

The volume average particle size of the particles is preferably 0.5 µm to 50 µm. A small particle size may cause the resulting film to have low surface smoothness, whereas a large particle size may cause abrasion resistance to deteriorate. The particle size is preferably 1.0 µm to 30 µm, more preferably 1.5 µm to 20 µm, or even more preferably 1.9 µm to 15 µm. In the present invention, the volume average particle size of the silicone rubber particles is determined using the Coulter counter method (impedance method).

The silicone rubber of the silicone rubber particles is a product of an addition reaction of a curable liquid silicone composition comprising a diorganopolysiloxane (B-1) having two or more alkenyl groups in one molecule, an organopolysiloxane resin (B-2) having an alkenyl group, and an organohydrogen polysiloxane (B-3) having two or more SiH groups in one molecule.

The diorganopolysiloxane having two or more alkenyl groups in one molecule of component (B-1) is represented by the following average composition formula (1):

R²ₐR³_{b}SiO_{(4-a-b)/2} (1).

In the formula, R² is, independently of each other, an unsubstituted or substituted monovalent hydrocarbon group having 1 to 30 carbon atoms and having no alkenyl group; R³ is, independently of each other, an alkenyl group having 2 to 8 carbon atoms; and a and b are positive numbers that satisfy 0 < a < 3, 0 < b ≤ 3, and 0.1 ≤ a + b ≤ 3.

The diorganopolysiloxanes represented by average composition formula (1) may be used alone or in combination of two or more kinds.

R² is an unsubstituted or substituted monovalent hydrocarbon group having 1 to 30 carbon atoms, and is preferably a monovalent hydrocarbon group having 1 to 22 carbon atoms, or more preferably a monovalent hydrocarbon group having 1 to 18 carbon atoms.

Examples of R² include: alkyl groups such as a methyl group, an ethyl group, a propyl group, a butyl group, a pentyl group, a hexyl group, a heptyl group, an octyl group, a decyl group, an undecyl group, a dodecyl group, a tetradecyl group, a pentadecyl group, a hexadecyl group, a heptadecyl group, an octadecyl group, a nonadecyl group, an icosyl group, a henicosyl group, a docosyl group, a tricosyl group, a tetracosyl group, or a triacontyl group; aryl groups such as a phenyl group, a tolyl group, or a naphthyl group; aralkyl groups such as a benzyl group or a phenethyl group; cycloalkyl groups such as a cyclopentyl group, a cyclohexyl group, or a cycloheptyl group; and hydrocarbon groups wherein some or all of the hydrogen atoms bonded to the carbon atoms of these groups are substituted with a halogen atom (a fluorine atom, a chlorine atom, a bromine atom, or an iodine atom) or other atom and/or substituent such as an acryloyloxy group, a methacryloyloxy group, an amino group, an epoxy group, a glycidoxy group, or a carboxyl group. Preferably, 50 mol% or more of all the R²s are methyl groups.

Examples of R³ include a vinyl group, an allyl group, a propenyl group, a butenyl group, a pentenyl group, a hexenyl group, and an octenyl group. A vinyl group, an allyl group, or a hexenyl group is preferable, and a vinyl group is more preferable.

a and b are preferably positive numbers that satisfy 0 < a ≤ 2.295, 0.005 ≤ b ≤ 2.3, and 0.5 ≤ a + b ≤ 2.3.

In the silicone rubber particles above, the amount of alkenyl groups in component (B-1) is preferably 0.0025 to 0.034 mol/100 g. If the amount of alkenyl groups is more than 0.034 mol/100 g, that causes the strength and elongation of the silicone rubber to decrease. If the amount of alkenyl groups is less than 0.0025 mol/100 g, that causes the structure to have a high degree of polymerization, so that causing the viscosity to increase, the viscosity of the curable liquid silicone comprising components (B-2) and (B-3) to increase, and emulsification described below to become difficult. The amount of alkenyl groups is more preferably 0.0030 to 0.027 mol/100 g, or even more preferably 0.0035 to 0.020 mol/100 g.

The viscosity of component (B-1) at 25°C is preferably 100,000 mm²/s or less, or more preferably 50,000 mm²/s or less. If the viscosity is higher than 100,000 mm²/s, that causes the viscosity of the curable liquid silicone comprising components (B-2) and (B-3) to increase and emulsification described below to become difficult. The lower limit of the viscosity is not particularly limited, but as a degree of polymerization lower than approximately 130 mm²/s causes an amount of alkenyl groups of 0.034 mol/100 g or less to become difficult to achieve, the lower limit may be 130 mm²/s or more, or particularly 200 mm²/s or more.

Furthermore, the structure of component (B-1) may be linear, cyclic, or branched, and a linear structure or a branched structure having few branched units is particularly preferable. The bonding sites for alkenyl groups are not particularly limited, and they may bond to any silicon atoms in the side chains of the molecule or at the ends of the molecule.

Examples of linear structures include those represented by the following general formula (2):

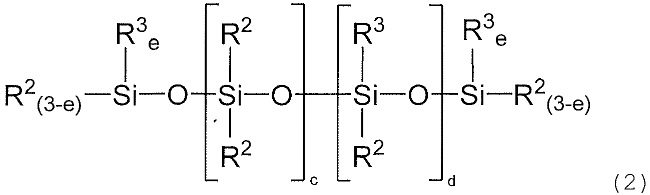

In the formula, R² and R³ are as defined above; c is a positive number of 10 to 1,500, preferably a positive number of 30 to 1,200, more preferably a positive number of 50 to 950, or even more preferably a positive number of 80 to 800; d is 0 or a positive number of 50 or less; and e is 0, 1, 2, or 3, provided that d and e are numbers that satisfy d + 2 × e ≥ 2.

Examples of branched structures include those represented by the following general formula (3) branched with R²SiO_{3/2} units:

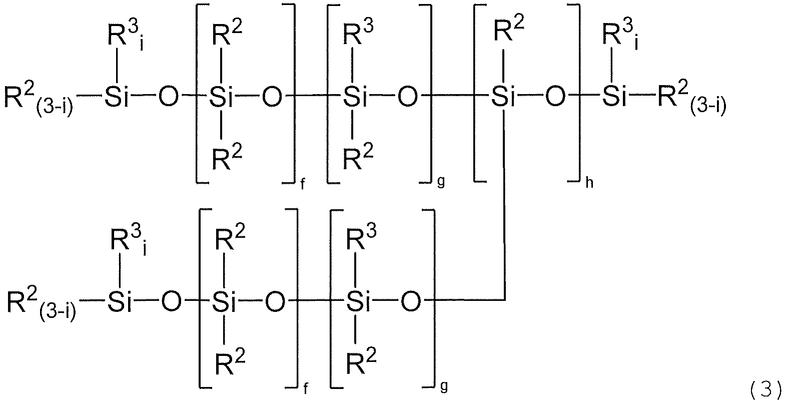

In the formula, R² and R³ are as defined above; f is a positive number of 10 to 1,500 or less, preferably a positive number of 30 to 1,200, more preferably a positive number of 50 to 950, or even more preferably a positive number of 80 to 800; g is 0 or a positive number of 50 or less; h is a positive number of 1 to 10; and i is 0, 1, 2, or 3, provided that g and i are numbers that satisfy g + i ≥ 1.

Examples of structures branched with SiO_{4/2} units include those represented by general formula (4) below:

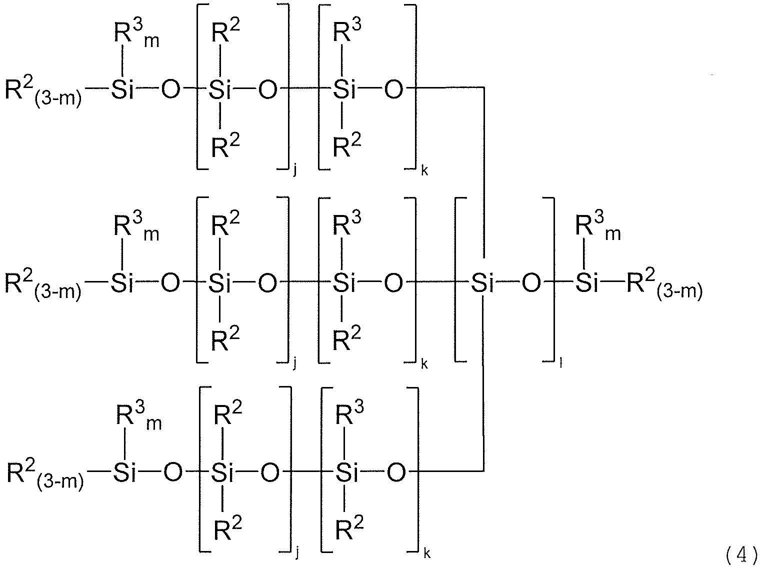

In the formula, R² and R³ are as defined above; j is a positive number of 10 to 1,500 or less, preferably a positive number of 30 to 1,200, more preferably a positive number of 50 to 950, or even more preferably a positive number of 80 to 800; k is 0 or a positive number of 50 or less; l is a positive number of 1 to 5; and m is 0, 1, 2, or 3, provided that k and m are numbers that satisfy k + m ≥ 1.

Component (B-2) is an organopolysiloxane resin having an alkenyl group and comprising R¹SiO_{1/2} and SiO_{4/2} units. Component (B-2) is solid at 25 °C.

In the formula, R¹ is, independently of each other, a substituted or unsubstituted monovalent hydrocarbon group having 1 to 30 carbon atoms and having no alkenyl group, or an alkenyl group having 2 to 8 carbon atoms. At least one of all the R¹ groups is an alkenyl group. The organopolysiloxane resins may be used alone or in combination of two or more kinds.

The monovalent hydrocarbon group having no alkenyl group above has 1 to 30 carbon atoms, preferably 1 to 20 carbon atoms, or more preferably 1 to 10 carbon atoms. Examples of the monovalent hydrocarbon group having no alkenyl group include the groups exemplified for R², and preferably 50 mol% or more of all the R²s are methyl groups.

Examples of the alkenyl group having 2 to 8 carbon atoms include a vinyl group, an allyl group, a propenyl group, a butenyl group, a pentenyl group, and a hexenyl group. A vinyl group or an allyl group is preferable, and a vinyl group is more preferable.

In the organopolysiloxane resin, the molar ratio of R¹₃SiO_{1/2} units (hereinafter referred to as M units) to SiO_{4/2} units (hereinafter referred to as Q units), that is, [moles of M units] / [moles of Q units], is 0.60 or more to 1.7 or less. The molar ratio is preferably 0.65 or more to 1.3 or less, more preferably 0.70 or more to 1.1 or less.

In addition to the M and Q units above, component (B-2) may also contain (R⁴O)SiO_{3/2} units. In the formula, R⁴ is, independently of each other, a hydrogen atom or an unsubstituted monovalent hydrocarbon group having 1 to 6 carbon atoms. The (R⁴O)SiO_{3/2} units are derived from the raw materials. Although R⁴O groups undergo a self-condensation reaction, unreacted R⁴O groups may remain in the organopolysiloxane resin. Examples of the unsubstituted monovalent hydrocarbon group having 1 to 6 carbon atoms include a methyl group, an ethyl group, a propyl group, a butyl group, a pentyl group, and a hexyl group. The content of (R⁴O)SiO_{3/2} units (referred to as Q₃ units) is preferably an amount such that the molar ratio of (R⁴O)SiO_{3/2} units to SiO_{4/2} units, [moles of (R⁴O)SiO_{3/2} units] / [moles of SiO_{4/2} units], is less than 0.50. That is, [moles of Q₃ units] / [moles of Q units] is preferably 0 or more to 0.50 or less, more preferably 0.01 or more to 0.40 or less, or even more preferably 0.02 or more to 0.30 or less.

Component (B-2) may also contain R⁵SiO_{3/2} units and/or R⁶₂SiO_{2/2} units within a range that does not impair its solidifying properties at 25°C and its solubility relative to Components (B-1) and (B-3) in the production of the silicone rubber particles (A) described below. In the aforesaid formulas, R⁵ and R⁶ are, independently of each other, a substituted or unsubstituted monovalent hydrocarbon group having 1 to 30 carbon atoms. The content of R⁵SiO_{3/2} units (referred to as T units) and R⁶₂SiO_{2/2} units (referred to as D units) is preferably an amount such that [moles of T and D units] / [moles of Q units] is 0.3 or less.

The amount of alkenyl groups in component (B-2) is preferably 0.001 mol/100 g or more. If the amount of alkenyl groups is less than 0.001 mol/100 g, that causes the strength and elongation of the silicone rubber to decrease. The amount of alkenyl groups is more preferably 0.005 mol/100 g or more, or even more preferably 0.01 mol/100 g or more. The upper limit is not particularly limited. If the amount of alkenyl groups is more than 2.0 mol/100 g, a molar ratio of the moles of M units relative to moles of Q units is 1.7 or less. The upper limit may be 0.8 mol/100 g or less or particularly 0.50 mol/100 g or less.

The weight average molecular weight of component (B-2), in terms of polystyrene using gel permeation chromatography, is preferably 1,000 to 10,000, or more preferably 2,000 to 8,000.

The organohydrogen polysiloxane having two or more SiH groups in one molecule of component (B-3) is preferably represented by the following average composition formula (5):

R⁷ₙHₒSiO_{(4-n-o)/2} (5).

In the formula, R⁷ is, independently of each other, an unsubstituted or substituted monovalent hydrocarbon group having 1 to 30 carbon atoms and having no alkenyl group. n and o are numbers that satisfy 0 < n < 3, 0 < o ≤ 3, and 0.1 ≤ n + o ≤ 3.

The organohydrogen polysiloxanes represented by average composition formula (5) may be used alone or in combination of two or more kinds.

R⁷ has 1 to 30 carbon atoms, preferably has 1 to 22 carbon atoms, or more preferably has 1 to 18 carbon atoms. Examples of R⁷ include the monovalent hydrocarbon groups exemplified for R², and preferably 80 mol% or more of all the R⁷s are methyl groups. More preferably, 95% or more of them are methyl groups. n and o are preferably positive numbers that satisfy 0 < n ≤ 2.295, 0.005 ≤ o ≤ 2.3, and 0.5 ≤ n + o ≤ 2.3.

The amount of SiH groups in component (B-3) is preferably 0.030 to 1.30 mol/100 g. If the amount of SiH groups is less than 0.030 mol/100 g, that causes the strength and elongation of the silicone rubber to decrease. If the amount of SiH groups is more than 1.30 mol/100 g, that may cause dispersed particles in a water dispersion of silicone rubber particles described below to aggregate. The amount of SiH groups is more preferably 0.050 to 1.10 mol/100 g or even more preferably 0.10 to 0.90 mol/100 g.

The viscosity of component (B-3) at 25°C is preferably 100,000 mm²/s or less, or more preferably 10,000 mm²/s or less. If the viscosity is 100,000 mm²/s or less, that causes silicone fine particles having a narrow particle size distribution to become particularly easy to obtain using the production method described below. The lower limit of the viscosity is not particularly limited and may be 0.4 mm²/s or more or particularly 2 mm²/s or more. Furthermore, the structure of component (B-3) may be linear, cyclic, or branched, and a linear structure or a branched structure is particularly preferable. The bonding sites for hydrogen atoms bonded to silicon atoms are not particularly limited, and they may bond to any silicon atoms in the side chains of the molecule or at the ends of the molecule.

Examples of linear structures include those represented by the following general formula (6):

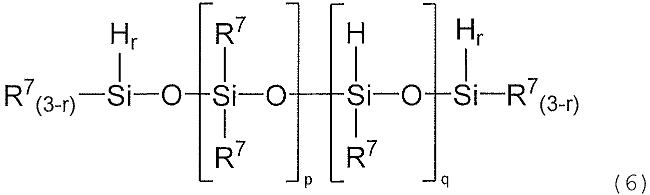

In the formula, R⁷ is as defined above; p is a positive number of 1,500 or less, preferably 1 to 1,000, more preferably 5 to 500, or even more preferably 10 to 100; q is 0 or a positive number of 300 or less, preferably 1 to 100, or more preferably 2 to 60; and r is 0, 1, 2, or 3, provided that q and r are numbers that satisfy q + 2 × r ≥ 2.

Examples of branched structures include those represented by the following general formula (7) branched with R⁷SiO_{3/2} units:

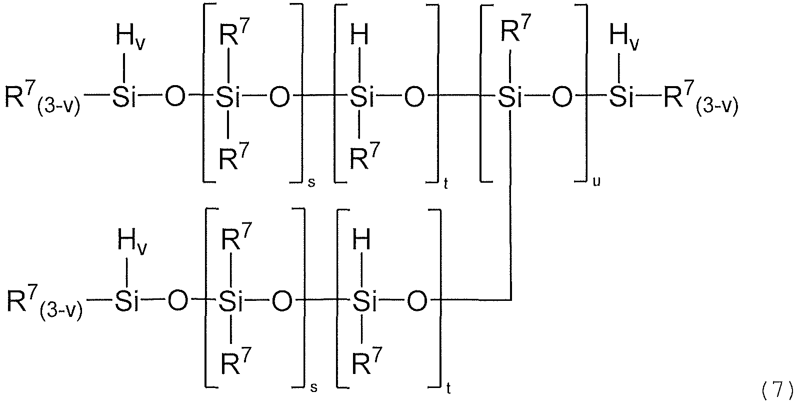

In the formula, R⁷ is as defined above; s is a positive number of 1,500 or less, preferably 1 to 1,000, more preferably 5 to 500, or even more preferably 10 to 100; t is 0 or a positive number of 300 or less, preferably 1 to 100, or more preferably 2 to 60; u is a positive number of 1 to 10; and v is 0, 1, 2, or 3, provided that t and v are numbers that satisfy t + v ≥ 1.

Examples of structures branched with SiO_{4/2} units include those represented by the following general formula (8):

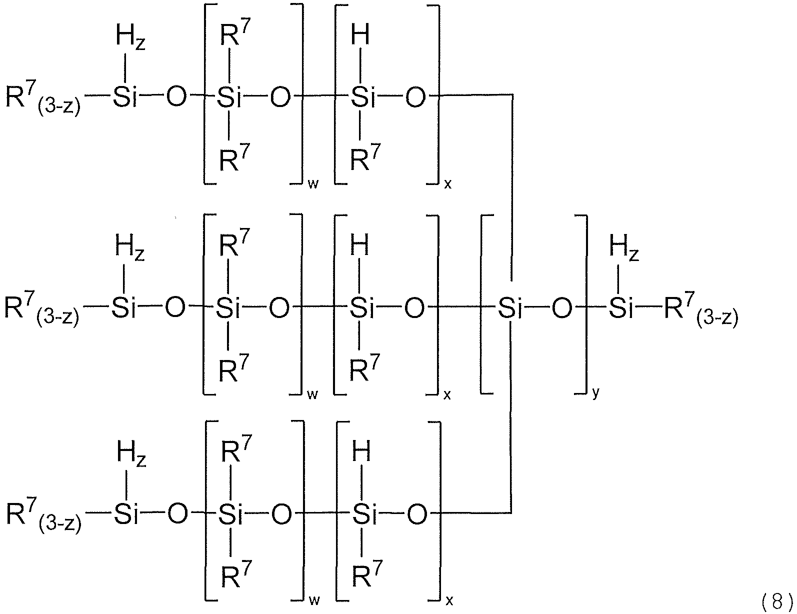

In the formula, R⁷ is as defined above; w is a positive number of 1,500 or less, preferably 1 to 1,000, more preferably 5 to 500, or even more preferably 10 to 100; x is 0 or a positive number of 300 or less, preferably 1 to 100, or more preferably 2 to 60; y is a positive number of 1 to 5; and z is 0, 1, 2, or 3, provided that x and z are numbers that satisfy x + z ≥ 1.

Other examples include those represented by the following unit formula (9) having two or more hydrogen atoms bonded to silicon atoms in one molecule.

[R⁷3SiO1/2]a1[H(R⁷)₂SiO_{1/2}]_{b1}[SiO_{4/2}]_{c1}[R⁸OSiO_{3/2}]_{d1} (9)

In the formula, R⁷ is as defined above; R⁸ is a hydrogen atom or an unsubstituted monovalent hydrocarbon group having 1 to 6 carbon atoms; a1 is 0 or a positive number; b1 is a positive number; c1 is a positive number; and d1 is 0 or a positive number. The upper limits of a1, b1, c1, and d1 are each a number that satisfies 20.

The components, that is, the diorganopolysiloxane (B-1) having two or more alkenyl groups in one molecule, the organopolysiloxane resin (B-2) having an alkenyl group, and the organohydrogen polysiloxane (B-3) having two or more SiH groups in one molecule, are mixed and dissolved to form a curable liquid silicone composition.

In the curable liquid silicone composition, the amount of component (B-2) is 1.0 to 65 parts by mass, relative to 100 parts by mass of the total amount of components (B-1), (B-2), and (B-3). If the amount of component (B-2) is less than 1.0 parts by mass, that causes the elongation and strength of the silicone rubber to decrease. If the amount of component (B-2) is more than 65 parts by mass, that causes the viscosity of the liquid silicone composition to increase and emulsification described below to become difficult. The amount of component (B-2) is preferably 2.0 to 55 parts by mass, or more preferably 4.0 to 45 parts by mass.

In the curable liquid silicone composition, the ratio of the number of SiH groups in component (B-3) to the total amount of alkenyl groups in components (B-1) and (B-2) is preferably 0.9 to 3.0. If the ratio of the number of SiH groups in component (B-3) is less than 0.9, that causes the elongation and strength of the silicone rubber to decrease. If the ratio of the number of SiH groups is higher than 3.0, that may cause dispersed particles in a water dispersion of silicone rubber particles described below to aggregate. The ratio of the number of SiH groups is more preferably within the range of 1.0 to 2.3.

The silicone rubber of the silicone rubber particles is a product of an addition reaction of the curable liquid silicone composition above. A catalyst is preferably used in the addition reaction. The catalyst for the addition reaction is, for example, a platinum-group-metal-based catalyst used in hydrosilylation reactions. Examples thereof include: platinum-group-metal simple substances such as platinum (including platinum black), rhodium, or palladium; platinum chlorides, chloroplatinic acids, and chloroplatinates such as H₂PtCl₄·XH₂O, H₂PtCl₆·XH₂O, NaHPtCl₆·XH₂O, KHPtCl₆·XH₂O, Na₂PtCl₆·XH₂O, K₂PtCl₄·XH₂O, PtCl₄·XH₂O, PtCl₂, or Na₂HPtCl₄·XH₂O (provided that, in the formulas, X is an integer of 0 to 6 or preferably 0 or 6); alcohol-modified chloroplatinic acids; olefin complexes of platinum chloride and chloroplatinic acid and vinyl-group-containing siloxane complexes of chloroplatinic acid and platinum; products obtained by supporting a platinum group metal such as platinum black or palladium with a carrier such as alumina, silica, or carbon; rhodium-olefin complexes; and chlorotris(triphenylphosphine)rhodium (Wilkinson's catalyst). These may be used alone or in combination of two or more kinds.

The blending amount of the platinum-group-metal-based catalyst may be an effective amount as an addition reaction catalyst. The amount of the platinum group metal in the platinum-group-metal-based catalyst is conventionally about 0.1 ppm to 500 ppm, preferably about 0.5 ppm to 200 ppm, or more preferably about 1 ppm to 100 ppm, in terms of mass, relative to the total amount of components (B-1), (B-2), and (B-3). The addition reaction curing conditions of the curable liquid silicone composition are not particularly limited, but curing conditions of a temperature of 1°C to 100°C for 1 hour or more are preferable. The temperature is preferably 10°C to 100°C.

The silicone rubber of the silicone rubber particles preferably has an elongation at break of 15 % or more and a tensile strength at break of 0.9 MPa or more. The elongation at break and tensile strength at break refer to values determined using the test method according to JIS K 6251: 2017 for a 1 mm thick dumb-bell-shaped type 3 test piece subjected to a heat treatment at 150 °C for 30 minutes. A low elongation and a low tensile strength cause the resulting film to have poor abrasion resistance. More preferably, the elongation at break is 20 % or more and the tensile strength at break is 1.0 MPa or more. The upper limit of the elongation at break is not particularly limited and may be 1,000 % or less or particularly 500 % or less. The upper limit of the tensile strength at break is not particularly limited and may be 20 MPa or less or particularly 10 MPa or less.

The silicone rubber of the silicone rubber particles preferably has a Type A durometer hardness value within the range of 20 to 95. The hardness refers to a value determined using the test method specified in according to K 6253: 2012 for a test piece subjected to a heat treatment at 150°C for 30 minutes. A lo according to w hardness value causes the resulting film to have low surface smoothness, whereas a high hardness value causes abrasion resistance to deteriorate. The hardness value is more preferably within the range of 40 to 85.

The silicone rubber may contain silicone oils, organosilanes, inorganic powders, organic powders, antioxidants, and the like.

The water dispersion of silicone rubber particles (B) of the present invention contains a surfactant and water in addition to silicone rubber particles. The surfactant functions as a dispersant for the silicone rubber particles. As described below, it also functions as an emulsifier for a curable liquid silicone composition in the production of the water dispersion of silicone rubber particles.

The surfactant is not particularly limited, and is a nonionic surfactant, an anionic surfactant, a cationic surfactant, or an amphoteric surfactant. A nonionic surfactant or an anionic surfactant is preferable. These may be used alone or in an appropriate combination of two or more kinds.

Examples of the nonionic surfactant include polyoxyethylene alkyl ethers, polyoxyethylene polyoxypropylene alkyl ethers, polyoxyethylene alkyl phenyl ethers, polyethylene glycol fatty acid esters, sorbitan fatty acid esters, polyoxyethylene sorbitan fatty acid esters, polyoxyethylene sorbitol fatty acid esters, glycerin fatty acid esters, polyoxyethylene glycerin fatty acid esters, polyglycerin fatty acid esters, propylene glycol fatty acid esters, polyoxyethylene castor oil, polyoxyethylene hydrogenated castor oil, polyoxyethylene hydrogenated castor oil fatty acid esters, polyoxyethylene alkyl amines, polyoxyethylene fatty acid amides, polyoxyethylene-modified organopolysiloxanes, and polyoxyethylene-polyoxypropylene-modified organopolysiloxanes.

Polyoxyethylene alkyl ethers or polyoxyethylene polyoxypropylene alkyl ethers having an HLB value of 12.0 to 19.0 are preferable. Polyoxyethylene alkyl ethers or polyoxyethylene polyoxypropylene alkyl ethers whose alkyl groups have 10 to 18 carbon atoms are more preferable. Furthermore, the HLB value is more preferably 13.0 to 18.0.

The HLB value as mentioned herein is a value calculated using Griffin's method represented by the following equation: HLB = [molecular weight of polyoxyethylene and alcohol moieties/molecular weight of surfactant] × 20.

When two or more kinds of nonionic surfactants having different HLB values are used in combination, the HLB value above is a weighted average value.

Examples of the anionic surfactant include: alkyl sulfates such as sodium lauryl sulfate; polyoxyethylene alkyl ether sulfates; polyoxyethylene alkyl phenyl ether sulfates; fatty acid alkylol amide sulfates; alkyl benzene sulfonates; polyoxyethylene alkyl phenyl ether sulfonates; α-olefin sulfonates; α-sulfofatty acid esters and salts; alkyl naphthalene sulfonates; alkyl diphenyl ether disulfonates; alkane sulfonates; N-acyl taurates; dialkyl sulfosuccinates; monoalkyl sulfosuccinates; polyoxyethylene alkyl ether sulfosuccinates; fatty acid salts; polyoxyethylene alkyl ether carboxylates; N-acyl amino acid salts; monoalkyl phosphates; dialkyl phosphates; and polyoxyethylene alkyl ether phosphates.

Alkyl sulfates whose alkyl groups have 10 to 18 carbon atoms, polyoxyethylene alkyl ether sulfates, fatty acid alkylol amide sulfates, alkyl benzene sulfonates, α-sulfofatty acid esters and salts, alkane sulfonates, N-acyl taurates, polyoxyethylene alkyl ether sulfosuccinates, polyoxyethylene alkyl ether carboxylates, N-acyl amino acid salts, monoalkyl phosphates, dialkyl phosphates, polyoxyethylene alkyl ether phosphates, α-olefin sulfonates whose olefins have 10 to 18 carbon atoms, alkyl naphthalene sulfonates whose alkyl groups have 1 to 14 carbon atoms, and alkyl diphenyl ether disulfonates whose alkyl groups have 6 to 14 carbon atoms are preferable.

Examples of the cationic surfactant include alkyltrimethylammonium salts, dialkyldimethylammonium salts, polyoxyethylene alkyldimethylammonium salts, dipolyoxyethylene alkylmethylammonium salts, tripolyoxyethylene alkylammonium salts, alkylbenzyldimethylammonium salts, alkylpyridinium salts, monoalkyl amine salts, and monoalkyl amidoamine salts.

Examples of the amphoteric surfactant include alkyl dimethyl amine oxide, alkyl dimethyl carboxybetaine, alkyl amidopropyl dimethyl carboxybetaine, alkyl hydroxysulfobetaine, and alkyl carboxymethyl hydroxyethyl imidazolinium betaine.

The amount of the surfactant is 0.05 to 20 parts by mass, relative to 100 parts by mass of the silicone rubber particles. If the amount of the surfactant is less than 0.05 parts by mass, that may cause emulsification of a curable liquid silicone composition described below to become impossible and the stability of the water dispersion to decrease. If the amount of the surfactant is more than 20 parts by mass, that does not increase the water dispersion efficiency of the silicone rubber particles and may cause the characteristics of blended materials such as paints to be impaired. The amount of the surfactant is preferably 0.10 to 10 parts by mass, or more preferably 0.20 to 2 parts by mass.

The amount of water in the water dispersion of silicone rubber particles (B) of the present invention is 20 to 2,000 parts by mass, and preferably 40 % to 1,000 % by mass, relative to 100 parts by mass of the silicone rubber particles. The amount of the silicone rubber particles is preferably 5 % to 70 % by mass, relative to the mass of the water dispersion.

### [Production method of the water dispersion of silicone rubber particles (B)]

The water dispersion of silicone rubber particles (B) may be produced using known methods. Examples thereof include a method wherein a surfactant and water are added to a curable liquid silicone composition comprising components (B-1), (B-2), and (B-3), the resultant is emulsified to form an emulsion, a platinum-group-metal-based catalyst is then added thereto, and an addition reaction is performed.

For emulsification, a general emulsifying and dispersing machine may be used. Examples thereof include: high-speed rotating centrifugal radial stirrers such as a homodisper; high-speed rotating shear stirrers such as a homomixer; high-pressure-jet emulsifying and dispersing machines such as a homogenizer; colloid mills; and ultrasonic emulsifiers. The stirring speed, time, and other conditions are not particularly limited as long as emulsification can be performed and the desired particle size can be achieved.

A platinum-group-metal-based catalyst is added after an emulsion is produced. When the platinum-group-metal-based catalyst has poor dispersibility in water, it is preferably added to the emulsion with the platinum-group-metal-based catalyst dissolved in a surfactant. Examples of the surfactant include those described above, and nonionic surfactants are particularly preferable. A platinum-group-metal-based catalyst may be blended into the curable liquid silicone composition in advance. In such a case, it is necessary to adjust the temperature, adjust the amount of the catalyst, and blend in a reaction regulator such that the reaction does not proceed until the completion of emulsification.

The addition reaction may be performed at room temperature, 1 °C to 30 °C. In order to increase the reaction speed and reaction rate, it may be performed under heating at less than 100°C. The addition reaction time is appropriately selected.

When a silicone oil, organosilane, inorganic powder, organic powder, antioxidant, and the like are comprised in the silicone rubber particles, they may be dissolved or dispersed in the curable liquid silicone composition.

The water dispersion of silicone rubber particles or the silicone rubber particles of the present invention are blended into a coating agent and used. The coating agent comprising the silicone rubber particles is applied to a substrate and, then, a heat treatment is preferably conducted at a temperature of 100 °C to 300 °C for 1 minute to 3 hours. The heat treatment causes the addition reaction rate to improve and the elongation and strength of the silicone rubber to increase. Furthermore, the silicone rubber particles may be subjected to a heat treatment at a temperature of 100 °C to 300 °C for 1 minute to 3 hours in advance before they are blended into a paint, a coating agent, or the like.

### [Coating agent]

The coating agent of the present invention is a composition comprising the resin having film-forming properties described above, the silicone rubber particles described above, and water. More specifically, the coating agent is obtained by mixing an emulsion of the resin having film-forming properties and a water dispersion of silicone rubber particles. Mixing may be performed using conventionally known mixers and stirrers equipped with a paddle stirring blade, anchor stirring blade, or the like.

The mass ratio of the film-forming solid contents in component (A) to the silicone rubber particles in component (B) is within the range of 85:15 to 25:75. A low proportion of component (B) causes the resulting film to have low surface smoothness and low abrasion resistance, whereas a high proportion of component (B) causes abrasion resistance to deteriorate. The mass ratio is preferably 80:20 to 30:70. The amount of component (A) in the coating agent, as the amount of resin, is 0.5 % to 59 % by mass, preferably 1.2 % to 50 % by mass, or more preferably 2.5 % to 42 % by mass. Furthermore, the amount of component (B) in the coating agent, as the amount of silicone rubber, is 0.3 % to 52 % by mass, preferably 0.7.% to 44 % by mass, or more preferably 1.5 % to 37 % by mass.

Water may be blended in to adjust the amount of components in the coating agent. The coating agent of the present invention is aqueous, and the amount of water in the coating agent is 30 % to 98 % by mass, preferably 40 % to 95 % by mass, or more preferably 50 % to 90 % by mass. Various organic or inorganic pigments, wax emulsions, silicone oil emulsions, wettability improvers, adhesion improvers such as chlorinated polyolefin emulsions, preservatives, thickeners, pH adjusters, defoamers, and the like may be appropriately blended into the coating agent within a range that does not impair the effects of the present invention, if necessary.

The coating agent of the present invention is suitable for application to a substrate comprising a rubber material. The rubber material is not particularly limited, and examples thereof include natural rubber, ethylene-propylene-diene monomer rubber (EPDM), styrene butadiene rubber (SBR), chloroprene rubber, isobutylene-isoprene rubber, and nitrile rubber. The form of the substrate is not particularly limited and may be porous, rigid, or the like.

Examples of the method for applying the coating agent to a substrate include flat brush painting, spray coating, roll coating, flow coating, dip coating, and bar coating. The coating agent is preferably applied such that the thickness of the cured film is within the range of 1 µm to 40 µm or particularly 2 µm to 20 µm.

After the coating agent is applied to a substrate, a heat treatment at a temperature of 100 °C to 300 °C is desirable. The polymerization and fusion of resin components in component (A) proceed, resulting in a film with high strength. Furthermore, the addition reaction rate of the silicone rubber particles in component (B) improves, and the hardness, elongation, and strength of the silicone rubber increase. As a result, surface smoothness and abrasion resistance increase.

### EXAMPLES

The present invention will be explained below in further detail with reference to a series of the Examples and the Comparative Examples, though the present invention is in no way limited by these Examples.

In the examples, the kinematic viscosity is a value determined using a capillary viscometer at 25°C.

The film-forming resin emulsions of component (A) below were used.

### (A)-1: ADEKA BONTIGHTER HUX-564

Urethane emulsion; solid content concentration = 40%; volume average particle size = 320 nm; manufactured by ADEKA Corporation

### (A)-2: CHALINE RU-911

Silicone-urethane emulsion; solid content concentration = 36%; volume average particle size = 260 nm; manufactured by Nissin Chemical Industry Co., Ltd.

### (A)-3: KM-9749

Silicone rubber emulsion; solid content concentration = 43%; volume average particle size = 190 nm; manufactured by Shin-Etsu Chemical Co., Ltd.

The physical properties of the films of component (A) were determined according to the following manner.

An amount of the resin emulsion was poured into a polypropylene tray so as to have a thickness after drying of approximately 1 mm and dried at 25 °C for 48 hours. The dried product was peeled off the tray and heated in a hot-air circulation thermostatic chamber at 105 °C for 60 minutes to obtain a sheet.

The elongation at break and tensile strength at break of a dumb-bell-shaped type 3 test piece were tested according to the method defined in JIS K 6251: 2017. Six sheets were stacked, and the hardness of the rubber was determined using a Type A durometer tester according to the method defined in JIS K 6251: 2017. The results are shown in Table 1.

**[Table 1]**

| Component (A) | Elongation at break, % | Tensile strength at break, MPa | Hardness of a rubber, Type A durometer |
|---|---|---|---|
| (A) -1 | 540 | 38 | 84 |
| (A) -2 | 510 | 34 | 81 |
| (A) -3 | 650 | 2.3 | 38 |

### [Production of the water dispersion of silicone rubber particles of component (B)]

The following polysiloxanes were prepared.
(B-1)-1: Vinyl-group-containing dimethyl polysiloxane represented by formula (10) and having an amount of vinyl groups of 0.00627 mol/100 g and a kinematic viscosity of 5,060 mm²/s 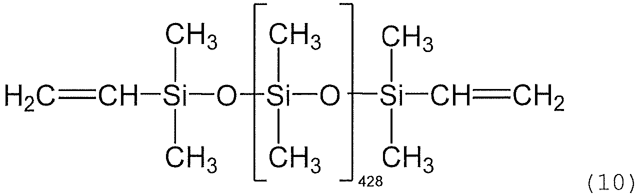
(B-1)-2: Vinyl-group-containing dimethyl polysiloxane represented by formula (11) and having an amount of vinyl groups of 0.00369 mol/100 g and a kinematic viscosity of 30,500 mm²/s 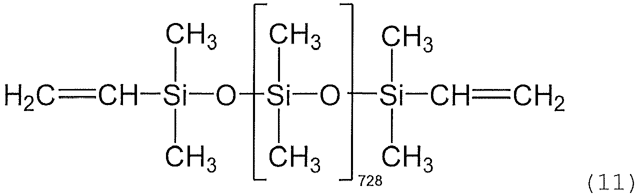
(B-1)-3: Vinyl-group-containing dimethyl polysiloxane represented by formula (12) and having an amount of vinyl groups of 0.0179 mol/100 g and a kinematic viscosity of 386 mm²/s 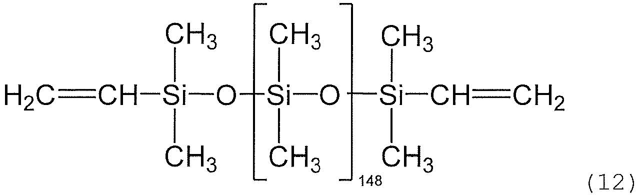
(B-1)-4: Vinyl-group-containing dimethyl polysiloxane, which is a dissolved product obtained by mixing (A-1)-1 and (A-1)-3 at a mass ratio of 40:60, having an amount of vinyl groups of 0.0132 mol/100 g and a kinematic viscosity of 1,080 mm²/s
(B-1)-5: Vinyl-group-containing dimethyl polysiloxane represented by formula (13) and having an amount of vinyl groups of 0.0348 mol/100 g and a kinematic viscosity of 125 mm²/s 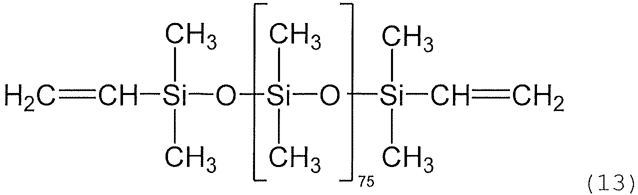
(B-1)-6: Vinyl-group-containing dimethyl polysiloxane represented by formula (14) and having an amount of vinyl groups of 0.120 mol/100 g and a kinematic viscosity of 23 mm²/s 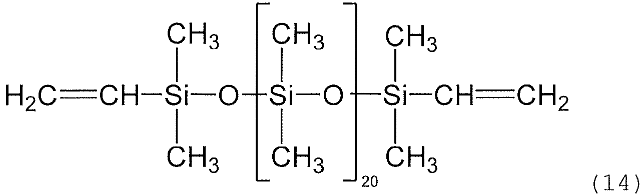
(B-1)-7: Vinyl-group-containing dimethyl polysiloxane represented by formula (15) and having an amount of vinyl groups of 0.180 mol/100 g and a kinematic viscosity of 10 mm²/s 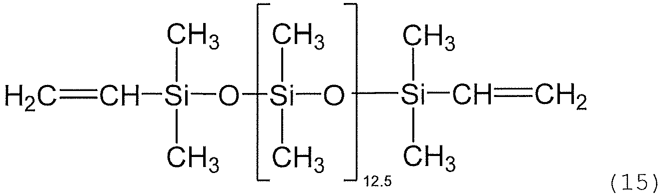
(B-2)-1: Vinyl-group-containing methyl polysiloxane resin comprising (CH₃)₃SiO_{1/2}, (CH₃)₂(CH=CH₂)SiO_{1/2}, SiO_{4/2}, HOSiO_{3/2}, and CH₃OSiO_{3/2} units and having the following molar ratios,

The molar ratio ([(CH₃)₃SiO_{1/2}] + [(CH₃)₂(CH=CH₂)SiO_{1/2}]) / [SiO_{4/2}] is 0.83;
the molar ratio [(CH₃)₃SiO_{1/2}] / [SiO_{4/2}] is 0.71;
the molar ratio [(CH₃)₂(CH=CH₂)SiO_{1/2}] / [SiO_{4/2}] is 0.12;
the molar ratio ([HOSiO_{3/2}] + [CH₃OSiO_{3/2}]) / [SiO_{4/2}] is 0.088;
the molar ratio [HOSiO_{3/2}] / [SiO_{4/2}] is 0.041;
the molar ratio [CH₃OSiO_{3/2}] / [SiO_{4/2}] is 0.047;
the amount of vinyl groups is 0.089 mol/100 g; and the weight average molecular weight is 4,100.

(B-2)-2: Vinyl-group-containing methyl polysiloxane resin comprising (CH₃)₃SiO_{1/2}, (CH=CH₂)₃SiO_{1/2}, SiO_{4/2}, HOSiO_{3/2}, and C₂H₅OSiO_{3/2} units and having the following molar ratios,

The molar ratio ([(CH₃)₃SiO_{1/2}] + [(CH=CH₂)₃SiO_{1/2}]) / [SiO_{4/2}] is 1.01;
the molar ratio [(CH₃)₃SiO_{1/2}] / [SiO_{4/2}] is 0.90;
the molar ratio [(CH=CH₂)₃SiO_{1/2}] / [SiO_{4/2}] is 0.11;
the molar ratio ([HOSiO_{3/2]} + [C₂H₅OSO_{3/2}]) / [SiO_{4/2}] is 0.10;
the molar ratio [HOSiO_{3/2}] / [SiO_{4/2}] is 0.050;
the molar ratio [C₂H₅OSiO_{3/2}] / [SiO_{4/2}] is 0.050;
the amount of vinyl groups is 0.23 mol/100 g; and the weight average molecular weight is 5,730.

(B-3)-1: Methyl hydrogen polysiloxane represented by formula (16) and having an amount of SiH groups of 0.418 mol/100 g and a kinematic viscosity of 27 mm²/s

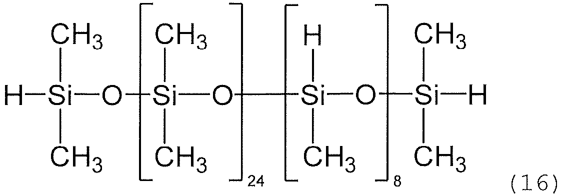

(B-3)-2: Methyl hydrogen polysiloxane represented by formula (17) and having an amount of SiH groups of 0.744 mol/100 g and a kinematic viscosity of 117 mm²/s

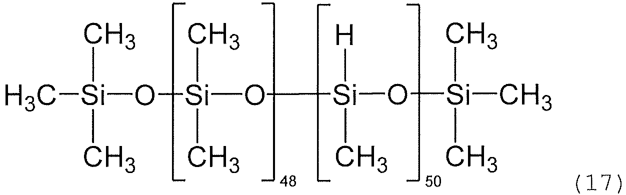

(B-3)-3: Methyl hydrogen polysiloxane represented by formula (18) and having an amount of SiH groups of 0.137 mol/100 g and a kinematic viscosity of 37 mm²/s

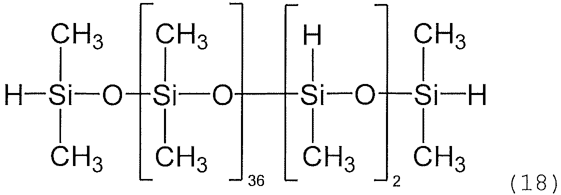

### [Production of component (B)-1]

The vinyl-group-containing dimethyl polysiloxane (B-1)-1, the vinyl-group-containing methyl polysiloxane resin (B-2)-1, and the methyl hydrogen polysiloxane (B-3)-1 were mixed and dissolved at a mass ratio of 63.0:27.0:10.0 to prepare a curable liquid silicone composition.

The ratio of the number of SiH groups in the methyl hydrogen polysiloxane to the total amount of vinyl groups in the vinyl-group-containing dimethyl polysiloxane and the vinyl-group-containing methyl polysiloxane resin is 1.49.

In a glass beaker having a volume of 1 L, were placed 500.0 g of the curable liquid silicone composition, 2.0 g of polyoxyethylene tridecyl ether (number of moles added ethylene oxide = 15 moles), and 80.0 g of water and stirred using a homomixer at 6,000 rpm, the resultant assumed an oil-in-water configuration, which was found to have increased viscosity. Stirring was further continued for 15 minutes. Then, 415.6 g of water was added thereto while stirring at 2,000 rpm to obtain a homogeneous white emulsion. This emulsion was transferred to a glass flask having a volume of 1 L, which was equipped with a stirrer having an anchor stirring blade, and the temperature was adjusted to 15 °C to 20 °C. Then, a mixed dissolved product of 1.2 g of an isododecane solution of a platinum- and vinyl-group-containing disiloxane complex (platinum content: 0.5%) and 1.2 g of polyoxyethylene lauryl ether (number of moles added ethylene oxide = 9 mol) were added thereto under stirring. The resultant was stirred at the same temperature for 6 hours, then the curable liquid silicone was cured using an addition reaction to obtain a water dispersion of silicone rubber particles (B)-1. The total amount of polyoxyethylene tridecyl ether and polyoxyethylene lauryl ether is 0.64 parts by mass, relative to 100 parts by mass of the resulting silicone rubber particles.

The shape of the silicone rubber particles (B)-1 was observed using an optical microscope and confirmed spherical. The volume average particle size thereof was 6.7 µm by the determination using a "Multisizer 3" particle size distribution measuring device (product name; manufactured by Beckman Coulter, Inc.).

Approximately 2 g of the resulting water dispersion of silicone rubber particles was placed in an aluminum Petri dish and heated in a hot-air circulation thermostatic chamber at 150 °C for 30 minutes to remove water by evaporation and further promote the addition reaction. The resulting dried product was granules that did not exhibit any stickiness, whose shape was spherical when observed using an electron microscope.

The tensile strength at break and elongation at break of the silicone rubber of the silicone rubber particles were determined in the following manner.

In 100 parts by mass of a curable liquid silicone composition prepared with the same composition as Example 1 above, 0.24 parts by mass of an isododecane solution of a platinum- and vinyl-group-containing disiloxane complex (platinum content: 0.5 %) and 0.05 parts by mass of ((1,1-dimethyl-propynyl)oxy)trimethylsilane (reaction regulator) were mixed, and the resulting mixture was then poured into a polypropylene tray so as to have a thickness of approximately 1 mm. After the resultant was left to stand at 25 °C for 24 hours, the cured silicone was peeled off the tray and heated in a thermostatic chamber at 150 °C for 30 minutes to obtain a silicone rubber sheet that did not exhibit any stickiness. The silicone rubber sheet was cut to the shape and dimensions of a dumb-bell-shaped type 3 test piece according to JIS K 6251: 2017. The tensile strength at break and elongation at break of the silicone rubber sheet were measured according to the method specified in JIS K 6251: 2017. The tensile strength at break was 6.5 MPa, and the elongation at break was 101 %.

The hardness of the silicone rubber of the silicone rubber particles was determined in the following manner.

In 100 parts by mass of a curable liquid silicone composition prepared with the same composition as Example 1 above, 0.24 parts by mass of an isododecane solution of a platinum- and vinyl-group-containing disiloxane complex (platinum content: 0.5 %) and 0.05 parts by mass of ((1,1-dimethyl-propynyl)oxy)trimethylsilane (reaction regulator) were mixed, and the resulting mixture was then poured into an aluminum Petri dish so as to have a thickness of 10 mm. After the resultant was left to stand at 25 °C for 24 hours, it was heated in a thermostatic chamber at 150 °C for 30 minutes to obtain a silicone rubber that did not exhibit any stickiness. The hardness value of the silicone rubber was 58 when determined using a Type A durometer according to JIS K 6253.

### [Production of components (B)-2 to (B)-12]

Water dispersions of silicone rubber particles were obtained in the same manner as component (B)-1, except that curable liquid silicone compositions prepared by mixing and dissolving a vinyl-group-containing dimethyl polysiloxane, a vinyl-group-containing methyl polysiloxane resin, and a methyl hydrogen polysiloxane as shown in Table 2 were used.

The volume average particle size of the silicone rubber particles, the shape of the silicone rubber particles, the tensile strength at break of the silicone rubber, the elongation at break of the silicone rubber, and the hardness of the silicone rubber were determined in the same manner as component (B)-1 and are shown in Table 2.

**[Table 2]**

| Silicone rubber particles, No. | | (B)-1 | (B)-2 | (B)-3 | (B)-4 | (B)-5 | (B)-6 | (B)-7 | (B)-8 | (B)-9 | (B)-10 | (B)-11 | (B)-12 |
|---|---|---|---|---|---|---|---|---|---|---|---|---|---|
| | (B-1)-1 | 63.0 | 53.5 | 42.7 | 73.9 | 86.1 | 91.6 | 35.7 | 82.6 | | | | |
| | (B-1)-2 | | | | | | | | | 65.1 | 54.2 | | |
| Curable liquid Silicone composition, Part by mass | (B-1)-3 | | | | | | | | | | | 62.4 | |
| | (B-1)-4 | | | | | | | | | | | | 62.0 |
| | (B-2)-1 | 27.0 | 35.8 | 42.7 | 18.5 | 9.6 | 4.8 | 35.7 | | 27.9 | 36.1 | 26.7 | 26.6 |
| | (B-2)-2 | | | | | | | | 9.2 | | | | |
| | (B-3)-1 | 10.0 | | 14.6 | 7.6 | 4.3 | 3.6 | | 8.2 | | | 10.9 | 11.4 |
| | (B-3)-2 | | 10.8 | | | | | | | 7.0 | 9.7 | | |
| | (B-3)-3 | | | | | | | 28.6 | | | | | |
| Molar ratio, H/Vi | | 1.49 | 2.29 | 1.50 | 1.51 | 1.29 | 1.50 | 1.15 | 1.30 | 1.91 | 2.11 | 1.30 | 1.50 |
| Volume average particle size, µm | | 6.7 | 6.3 | 6.2 | 6.9 | 8.3 | 7.3 | 5.8 | 7.6 | 8.2 | 7.8 | 5.7 | 5.9 |
| Shape observed using an electron microscope | | Spherical | Spherical | Spherical | Spherical | Spherical | Spherical | Spherical | Spherical | Spherical | Spherical | Spherical | Spherical |
| Tensile strength at break, MPa | | 6.5 | 7.3 | 1.6 | 3.6 | 3.7 | 1.5 | 1.4 | 3.8 | 8.5 | 9.5 | 1.2 | 3.0 |
| Elongation at break, % | | 101 | 59 | 25 | 118 | 243 | 280 | 67 | 180 | 64 | 73 | 41 | 75 |
| Durometer A hardness | | 58 | 76 | 67 | 46 | 31 | 28 | 53 | 45 | 65 | 80 | 61 | 61 |

### [Production of component (B)-13]

The vinyl-group-containing dimethyl polysiloxane (B-1)-4, the vinyl-group-containing methyl polysiloxane resin (B-2)-1, and the methyl hydrogen polysiloxane (B-3)-1 were mixed and dissolved at a mass ratio of 62.0:26.6:11.4 to prepare a curable liquid silicone composition. This composition was the same as the curable liquid silicone composition of the silicone rubber particles (B)-12 above. The tensile strength at break was 3.0 MPa, the elongation at break was 75 %, and the Type A durometer hardness value of the rubber was 61.

In a glass beaker having a volume of 1 L, were placed 500.0 g of the curable liquid silicone composition, 1.0 g of polyoxyethylene tridecyl ether (number of moles added ethylene oxide = 15 moles), and 100.0 g of water, and stirred using a homomixer at 6,000 rpm, the resultant assumed an oil-in-water configuration, which was found to have increased viscosity. Stirring was further continued for 15 minutes. Then, 396.6 g of water was added thereto while stirring at 2,000 rpm to obtain a homogeneous white emulsion. This emulsion was transferred to a glass flask having a volume of 1 L, which was equipped with a stirrer having an anchor stirring blade, and the temperature was adjusted to 15 °C to 20 °C. Then, a mixed dissolved product of 1.2 g of an isododecane solution of a platinum- and vinyl-group-containing disiloxane complex (platinum content: 0.5%) and 1.2 g of polyoxyethylene lauryl ether (number of moles added ethylene oxide = 9 mol) were added thereto under stirring. The resultant was stirred at the same temperature for 6 hours to obtain a water dispersion of silicone rubber particles.

The shape of the silicone rubber particles was observed using an optical microscope and confirmed spherical. The volume average particle size thereof was 11 µm by the determination using a "Multisizer 3" particle size distribution measuring device (product name; manufactured by Beckman Coulter, Inc.).

Approximately 2 g of the resulting water dispersion of silicone rubber particles was placed in an aluminum Petri dish and heated in a hot-air circulation thermostatic chamber at 150 °C for 30 minutes to remove water by evaporation and further promote the addition reaction. The resulting dried product was granules that did not exhibit any stickiness, whose shape was spherical when observed using an electron microscope.

### [Production of component (B)-14]

In a glass beaker having a volume of 1 L, were placed 500.0 g of the curable liquid silicone composition produced in the same manner as the silicone rubber particles (B)-13 above, 6.0 g of polyoxyethylene tridecyl ether (number of moles added ethylene oxide = 15 moles), and 40.0 g of water and stirred using a homomixer at 6,000 rpm, the resultant assumed an oil-in-water configuration, which was found to have increased viscosity. Then, the mixer was changed to a disperser, and the resultant was stirred at 4,000 rpm for 15 minutes. The mixer was changed again to a homomixer, and 451.6 g of water was added thereto while stirring at 2,000 rpm to obtain a homogeneous white emulsion. This emulsion was transferred to a glass flask having a volume of 1 L, which was equipped with a stirrer having an anchor stirring blade, and the temperature was adjusted to 15 °C to 20 °C. Then, a mixed dissolved product of 1.2 g of an isododecane solution of a platinum- and vinyl-group-containing disiloxane complex (platinum content: 0.5%) and 1.2 g of polyoxyethylene lauryl ether (number of moles added ethylene oxide = 9 mol) were added thereto under stirring. The resultant was stirred at the same temperature for 6 hours to obtain a water dispersion of silicone rubber particles.

The shape of the silicone rubber particles was observed using an optical microscope and confirmed spherical. The volume average particle size thereof was 1.9 µm by the determination using a "Multisizer 3" particle size distribution measuring device (product name; manufactured by Beckman Coulter, Inc.).

Approximately 2 g of the resulting water dispersion of silicone rubber particles was placed in an aluminum Petri dish and heated in a hot-air circulation thermostatic chamber at 150 °C for 30 minutes to remove water by evaporation and further promote the addition reaction. The resulting dried product was granules that did not exhibit any stickiness, whose shape was spherical when observed using an electron microscope.

### [Production of component (B)-15]

In a glass beaker having a volume of 1 L, were placed 500.0 g of the curable liquid silicone composition produced in the same manner as the silicone rubber particles (B)-13 above, 4.0 g of polyoxyethylene tridecyl ether (number of moles added ethylene oxide = 15 moles), and 80.0 g of water and stirred using a homomixer at 6,000 rpm, the resultant assumed an oil-in-water configuration, which was found to have increased viscosity. Stirring was further continued for 15 minutes. Then, 413.6 g of water was added thereto while stirring at 2,000 rpm to obtain a homogeneous white emulsion. This emulsion was transferred to a glass flask having a volume of 1 L, which was equipped with a stirrer having an anchor stirring blade, and the temperature was adjusted to 15 °C to 20 °C. Then, a mixed dissolved product of 1.2 g of an isododecane solution of a platinum- and vinyl-group-containing disiloxane complex (platinum content: 0.5%) and 1.2 g of polyoxyethylene lauryl ether (number of moles added ethylene oxide = 9 mol) were added thereto under stirring. The resultant was stirred at the same temperature for 6 hours to obtain a water dispersion of silicone rubber particles.

The shape of the silicone rubber particles was observed using an optical microscope and confirmed spherical. The volume average particle size thereof was 4.5 µm by the determination using a "Multisizer 3" particle size distribution measuring device (product name; manufactured by Beckman Coulter, Inc.).

Approximately 2 g of the resulting water dispersion of silicone rubber particles was placed in an aluminum Petri dish and heated in a hot-air circulation thermostatic chamber at 150 °C for 30 minutes to remove water by evaporation and further promote the addition reaction. The resulting dried product was granules that did not exhibit any stickiness, whose shape was spherical when observed using an electron microscope.

### [Production of component (B)-16]

In a glass beaker having a volume of 1 L, were placed 500.0 g of the curable liquid silicone composition produced in the same manner as the silicone rubber particles (B)-13 above, 1.3 g of polyoxyethylene tridecyl ether (number of moles added ethylene oxide = 15 moles), and 80.0 g of water and stirred using a homomixer at 6,000 rpm, the resultant assumed an oil-in-water configuration, which was found to have increased viscosity. Stirring was further continued for 15 minutes. Then, 416.3 g of water was added thereto while stirring at 2,000 rpm to obtain a homogeneous white emulsion. This emulsion was transferred to a glass flask having a volume of 1 L, which was equipped with a stirrer having an anchor stirring blade, and the temperature was adjusted to 15 °C to 20 °C. Then, a mixed dissolved product of 1.2 g of an isododecane solution of a platinum- and vinyl-group-containing disiloxane complex (platinum content: 0.5%) and 1.2 g of polyoxyethylene lauryl ether (number of moles added ethylene oxide = 9 mol) were added thereto under stirring. The resultant was stirred at the same temperature for 6 hours to obtain a water dispersion of silicone rubber particles.

The shape of the silicone rubber particles was observed using an optical microscope and confirmed spherical. The volume average particle size thereof was 8.7 µm by the determination using a "Multisizer 3" particle size distribution measuring device (product name; manufactured by Beckman Coulter, Inc.).

Approximately 2 g of the resulting water dispersion of silicone rubber particles was placed in an aluminum Petri dish and heated in a hot-air circulation thermostatic chamber at 150 °C for 30 minutes to remove water by evaporation and further promote the addition reaction. The resulting dried product was granules that did not exhibit any stickiness, whose shape was spherical when observed using an electron microscope.

### [Production of component (B)-17]

In a glass beaker having a volume of 1 L, were placed 500.0 g of the curable liquid silicone composition produced in the same manner as the silicone rubber particles (B)-13 above, 5.7 g of an aqueous solution of 35 % sodium pentyl naphthalene sulfonate (amount of sodium pentyl naphthalene sulfonate = approximately 2.0 g), and 76.0 g of water and stirred using a homomixer at 6,000 rpm, the resultant assumed an oil-in-water configuration, which was found to have increased viscosity. Then, the mixer was changed to a disperser, and the resultant was stirred at 4,000 rpm for 15 minutes. The mixer was changed again to a homomixer, and 415.9 g of water was added thereto while stirring at 2,000 rpm to obtain a homogeneous white emulsion. This emulsion was transferred to a glass flask having a volume of 1 L, which was equipped with a stirrer having an anchor stirring blade, and the temperature was adjusted to 15 °C to 20 °C. Then, a mixed dissolved product of 1.2 g of an isododecane solution of a platinum- and vinyl-group-containing disiloxane complex (platinum content: 0.5 %) and 1.2 g of polyoxyethylene lauryl ether (number of moles added ethylene oxide = 9 mol) were added thereto under stirring. The resultant was stirred at the same temperature for 6 hours to obtain a water dispersion of silicone rubber particles.

The shape of the silicone rubber particles was observed using an optical microscope and confirmed spherical. The volume average particle size thereof was 6.4 µm by the determination using a "Multisizer 3" particle size distribution measuring device (product name; manufactured by Beckman Coulter, Inc.).

Approximately 2 g of the resulting water dispersion of silicone rubber particles was placed in an aluminum Petri dish and heated in a hot-air circulation thermostatic chamber at 150 °C for 30 minutes to remove water by evaporation and further promote the addition reaction.

The resulting dried product was granules that did not exhibit any stickiness, whose shape was spherical when observed using an electron microscope.

### [Production of silicone rubber particles for Comparative Examples]

Water dispersions of silicone rubber particles were obtained in the same manner as component (B)-1, except that curable liquid silicone compositions prepared by mixing and dissolving a vinyl-group-containing dimethyl polysiloxane and a methyl hydrogen polysiloxane as shown in Table 3 were used. The volume average particle size of the silicone rubber particles, the shape of the silicone rubber particles, the tensile strength at break of the silicone rubber, the elongation at break of the silicone rubber, and the hardness of the silicone rubber were determined in the same manner as component (B)-1 and are shown in Table 3.

**[Table 3]**

| (B) Silicone rubber particles, No. | | (B) -18 | (B) -19 | (B) -20 |
|---|---|---|---|---|
| Curable | (B-1) -5 | 91.2 | | |
| liquid silicone composition, part by mass | (B-1)-6 | | 75.2 | |
| | (B-1) -7 | | | 78.2 |
| | Component (B-2) | | | |
| | (B-3) -1 | 8.8 | 24.8 | |
| | (B-3) -2 | | | 21.8 |
| Molar ratio, H/Vi | | 1.16 | 1.15 | 1.15 |
| Volume average particle size, µm | | 6.0 | 6.6 | 5.0 |
| Shape observed by an electron microscope | | Spherical | Spherical | Spherical |
| Tensile strength at break, MPa | | 0.55 | 0.87 | 0.50 |
| Elongation at break, % | | 48 | 16 | 3 |
| Durometer A hardness | | 43 | 63 | 75 |

### [Examples 1 to 16 and Comparative Examples 1 to 4]

The emulsion of the resin (A) having film-forming properties ((A)-1 or (A)-2) above, a water dispersion in which silicone rubber particles that are products of an addition reaction of the curable liquid silicone composition (B) above were dispersed at an amount of 50 % by mass, and water were mixed at the blending amounts shown in Tables 4, 5, and 6 to prepare aqueous coating agents. The resulting aqueous coating agents were each applied with a flat brush to one side of an EPDM rubber sheet (thickness: 2 mm) and heated in a hot-air circulation thermostatic chamber at 150 °C for 5 minutes to form cured films. The surface smoothness and abrasion resistance of the cured films were evaluated according to the following evaluation manners. The results are shown in Tables 4, 5, and 6.

### [Surface smoothness tests]

The coefficient of kinetic friction for glass was determined using a "TRIBOGEAR TYPE: 40" (product name; manufactured by Shinto Scientific Co., Ltd.) friction and wear tester. A glass plate was fixed to the table, and an EPDM rubber sheet with a size of 50 mm x 50 mm was affixed to the indenter with double-sided tape. The coefficient of kinetic friction was determined when the table was reciprocated under the conditions of a load of 500 g, a stroke speed of 1,000 mm/min, and a stroke distance of 80 mm. The lower the coefficient of kinetic friction, the higher the surface smoothness.

### [Abrasion resistance tests]

Wear tests were conducted with a stainless steel ball at a load of 300 g using a "TRIBOGEAR TYPE: 40" (product name; manufactured by Shinto Scientific Co., Ltd.) friction and wear tester.

An EPDM rubber sheet with a size of 25 mm × 150 mm was fixed to the table, and the indenter was a stainless steel ball with a diameter of 10 mm. The table was reciprocated under the conditions of a load of 300 g, a stroke speed of 6,000 mm/min, and a stroke length of 50 mm. The tests continued until film wear was observed, with observations conducted at 1, 10, 50, 100, 500, 1,000, 1,500 and 2,000 cycles of reciprocation. The results were expressed in terms of the number of reciprocations when film wear was observed.

**[Table 4]**

| Example | | 1 | 2 | 3 | 4 | ¹ 5 | 6 | 7 | 8 | 9 | 10 |
|---|---|---|---|---|---|---|---|---|---|---|---|
| Content, g | (A)-1 | 17.5 | 17.5 | 17.5 | 17.5 | 17.5 | 17.5 | 17.5 | 17.5 | 17.5 | 17.5 |
| | (B)-1 | 6.0 | | | | | | | | | |
| | (B)-2 | | 6.0 | | | | | | | | |
| | (B)-4 | | | 6.0 | | | | | | | |
| | (B)-5 | | | | 6.0 | | | | | | |
| | (B)-6 | | | | | 6.0 | | | | | |
| | (B)-7 | | | | | | 6.0 | | | | |
| | (B)-8 | | | | | | | 6.0 | | | |
| | (B)-9 | | | | | | | | 6.0 | | |
| | (B)-10 | | | | | | | | | 6.0 | |
| | (B)-12 | | | | | | | | | | 6.0 |
| | Water | 26.5 | 26.5 | 26.5 | 26.5 | 26.5 | 26.5 | 26.5 | 26.5 | 26.5 | 26.5 |
| A ratio of solid content in components (A) and (B), (A)/(B) | | 70/30 | 70/30 | 70/30 | 70/30 | 70/30 | 70/30 | 70/30 | 70/30 | 70/30 | 70/30 |
| Surface smoothness, Coefficient of kinetic friction | | 1.2 | 1.0 | 0.9 | 1.7 | 0.7 | 1.1 | 0.9 | 1.4 | 1.2 | 0.8 |
| Abrasion resistance, number | | 500 | 500 | 500 | 500 | 500 | 500 | 500 | 500 | 500 | 500 |

**[Table 5]**

| Example | | 11 | 12 | 13 | 14 | 15 | 16 |
|---|---|---|---|---|---|---|---|
| Content, g | (A)-1 | 17.5 | 17.5 | 17.5 | | | |
| | (A)-2 | | | | 19.4 | 19.4 | 19.4 |
| | (B)-12 | | | | 6.0 | | |
| | (B)-14 | 6.0 | | | | | |
| | (B)-15 | | | | | 6.0 | |
| | (B)-16 | | 6.0 | | | | 6.0 |
| | (B)-17 | | | 6.0 | | | |
| | Water | 26.5 | 26.5 | 26.5 | 24.6 | 24.6 | 24.6 |
| A ratio of solid content in components (A) and (B), (A)/(B) | | 70/30 | 70/30 | 70/30 | 70/30 | 70/30 | 70/30 |
| Surface smoothness, Coefficient of kinetic friction | | 1.2 | 0.9 | 0.8 | 0.9 | 1.2 | 1.0 |
| Abrasion resistance, number | | 500 | 500 | 500 | 1500 | 2000 | 1000 |

**[Table 6]**

| Comparative Example | | 1 | 2 | 3 | 4 |
|---|---|---|---|---|---|
| Content, g | (A)-1 | 25.0 | 17.5 | 17.5 | 17.5 |
| | (B)-18 * | | 6.0 | | |
| | (B)-19 * | | | 6.0 | |
| | (B)-20 * | | | | 6.0 |
| | Water | 25.0 | 26.5 | 26.5 | 24.6 |
| A ratio of solid content in components (A) and (B), (A)/(B) | | 100/0 | 70/30 | 70/30 | 70/30 |
| Surface smoothness, Coefficient of kinetic friction | | 2.0< | 0.9 | 0.4 | 0.6 |
| Abrasion resistance, number | | 1 | 10 | 10 | 50 |

| | | | | | |
|---|---|---|---|---|---|
| * The silicone rubber particles (B)-18, (B)-19 and (B)-20 comprise no component (B-2) | | | | | |

As shown in Tables 4 and 5 above, the coating agent of the present invention forms coating films with excellent surface smoothness and abrasion resistance.

### [Examples 17 to 30 and Comparative Examples 5 to 8]

The emulsion of the resin (A) having film-forming properties ((A)-3) above, a water dispersion in which silicone rubber particles that are products of an addition reaction of the curable liquid silicone composition (B) above were dispersed at an amount of 50 % by mass, and water were mixed at the blending amounts shown in Tables 7, 8, and 9 to prepare aqueous coating agents. The resulting aqueous coating agents were each applied with a flat brush to one side of an EPDM rubber sheet (thickness: 2 mm) and heated in a hot-air circulation thermostatic chamber at 150 °C for 5 minutes to form cured films. The surface smoothness and abrasion resistance of the cured films were evaluated according to the following evaluation manners. The results are shown in Tables 7, 8, and 9.

### [Surface smoothness tests]

The coefficient of kinetic friction for glass was determined using a "TRIBOGEAR TYPE: 40" (product name; manufactured by Shinto Scientific Co., Ltd.) friction and wear tester.

A glass plate was fixed to the table, and an EPDM rubber sheet with a size of 50 mm x 50 mm was affixed to the indenter with double-sided tape. The coefficient of kinetic friction was determined when the table was reciprocated under the conditions of a load of 500 g, a stroke speed of 1,000 mm/min, and a stroke distance of 80 mm. The lower the coefficient of kinetic friction, the higher the surface smoothness.

### [Abrasion resistance tests]

Wear tests were conducted with a stainless steel ball at a load of 1,000 g using a "TRIBOGEAR TYPE: 40" (product name; manufactured by Shinto Scientific Co., Ltd.) friction and wear tester.

An EPDM rubber sheet with a size of 25 mm × 150 mm was fixed to the table, and the indenter was a stainless steel ball with a diameter of 10 mm. The table was reciprocated under the conditions of a load of 1,000 g, a stroke speed of 6,000 mm/min, and a stroke length of 50 mm. The tests continued until film wear was observed, with observations conducted at 100, 500, 1,000, 1,500, 2,000, 2,500, 3,000, 3,500 and 4,000 cycles of reciprocation. The results were expressed in terms of the number of reciprocations when film wear was observed.

**[Table 7]**

| Example | | 17 | 18 | 19 | 20 | 21 | 22 | 23 | 24 | 25 |
|---|---|---|---|---|---|---|---|---|---|---|
| Content, g | (A)-3 | 16.3 | 16.3 | 16.3 | 16.3 | 16.3 | 16.3 | 16.3 | 16.3 | 16.3 |
| | (B)-1 | 6.0 | | | | | | | | |
| | (B)-3 | | 6.0 | | | | | | | |
| | (B)-9 | | | 6.0 | | | | | | |
| | (B)-10 | | | | 6.0 | | | | | |
| | (B)-11 | | | | | 6.0 | | | | |
| | (B)-12 | | | | | | 6.0 | | | |
| | (B)-13 | | | | | | | 6.0 | | |
| | (B)-15 | | | | | | | | 6.0 | |
| | (B)-16 | | | | | | | | | 6.0 |
| | Water | 27.7 | 27.7 | 27.7 | 27.7 | 27.7 | 27.7 | 27.7 | 27.7 | 27.7 |
| A ratio of solid content in components (A) and (B), (A)/(B) | | 70/30 | 70/30 | 70/30 | 70/30 | 70/30 | 70/30 | 70/30 | 70/30 | 70/30 |
| Surface smoothness, coefficient of kinetic friction | | 0.5 | 0.6 | 0.4 | 0.3 | 0.6 | 0.6 | 0.7 | 1.2 | 0.6 |
| Abrasion resistance, number | | 2000 | 4000 | 1500 | 3000 | 2000 | 2500 | 3000 | 2500 | 2500 |

**[Table 8]**

| Example | | 26 | 27 | 28 | 29 | 30 |
|---|---|---|---|---|---|---|
| Content, g | (A)-3 | 18.6 | 14.0 | 11.6 | 9.3 | 7.0 |
| | (B)-12 | 4.0 | 8.0 | 10.0 | 12.0 | 14.0 |
| | Water | 12.6 | 28.0 | 28.4 | 2.7 | 29.0 |
| A ratio of solid content in components (A) and (B), (A)/(B) | | 80/20 | 60/40 | 50/50 | 40/60 | 30/70 |
| Surface smoothness, coefficient of kinetic friction | | 0.8 | 0.6 | 0.6 | 0.7 | 0.4 |
| Abrasion resistance, number | | 3000 | 2500 | 3000 | 2000 | 2000 |

**[Table 9]**

| Comparative Example | | 5 | 6 | 7 | 8 |
|---|---|---|---|---|---|
| Content, g | (A)-3 | 23.3 | 16.3 | 20.9 | 4.7 |
| | (B)-12 | | | 2.0 | 16.0 |
| | (B)-20 * | | 6.0 | | |
| | Water | 26.7 | 27.7 | 27.1 | 29.3 |
| A ratio of solid content in components (A) and (B), (A)/(B) | | 100/0 | 70/30 | 90/10 | 20/80 |
| Surface smoothness, coefficient of kinetic friction | | 1.2 | 1.3 | 2.0< | 0.6 |
| Abrasion resistance, number | | 500 | 500 | 1000 | 1000 |

| | | | | | |
|---|---|---|---|---|---|
| * The silicone rubber particles (B)-20 comprise no component (B-2) | | | | | |

As shown in Tables 7 and 8 above, the coating agent of the present invention forms coating films with excellent surface smoothness and abrasion resistance even against friction under high load.

### INDUSTRIAL AVAILABILITY

The coating agent of the present invention is used for the purpose of improving rubber roller slipperiness, abrasion resistance, and stain resistance as well as preventing adhesion to O-rings, packings, gaskets, and the like. In particular, the coating agent is useful for improving abrasion resistance and slidability as well as preventing squeaky sounds in weatherstrip rubber around car doors and trucks.

## Claims

1. A coating agent comprising,
(A) a film-forming resin,
(B) a silicone rubber particle that is an addition reaction product of a curable liquid silicone composition comprising the following components (B-1), (B-2), and (B-3) :
(B-1) a diorganopolysiloxane having two or more alkenyl groups in one molecule;
(B-2) an organopolysiloxane resin comprising R¹₃SiO_{1/2} and SiO_{4/2} units,
wherein the molar ratio of R¹₃SiO_{1/2} units relative to SiO_{4/2} units is 0.60 or more to 1.7 or less, R¹ is, independently of each other, a substituted or unsubstituted monovalent hydrocarbon group having 1 to 30 carbon atoms and having no alkenyl group, or an alkenyl group having 2 to 8 carbon atoms, and at least one of all the R¹ groups is an alkenyl group; and
(B-3) an organohydrogen polysiloxane having two or more hydrogen atoms bonded to silicon atoms, referred to as a SiH group, in one molecule;
and water,
wherein an amount of component (B-2) is 1.0 to 65 parts by mass, relative to 100 parts by mass of the total amount of components (B-1), (B-2), and (B-3), and the mass ratio of component (A) to component (B) is 85:15 to 25:75.

2. The coating agent according to claim 1, wherein (B-1) the diorganopolysiloxane has an amount of alkenyl groups of 0.0025 to 0.034 mol/100 g, (B-2) the organopolysiloxane resin has an amount of alkenyl groups of 0.001 mol/100 g or more, and (B-3) the organohydrogen polysiloxane has an amount of SiH groups of 0.030 to 1.30 mol/100 g.

3. The coating agent according to claim 1, wherein the amount of (A) the film-forming resin is 0.5 to 59 parts by mass, the amount of (B) the silicone rubber particles is 0.3 to 52 parts by mass, and the amount of water is 30 to 98 parts by mass, relative to 100 parts by mass of the coating agent.

4. The coating agent according to claim 1, wherein the silicone rubber particles are spherical and have a volume average particle size of 0.5 to 50 µm.

5. The coating agent according to claim 1, comprising an emulsion of the film-forming resin.

6. The coating agent according to claim 1, wherein the film-forming resin is at least one kind selected from the groups consisting of a urethane resin, a vinyl chloride resin, an acrylic resin, a silicone-acrylic copolymer resin, a silicone-urethane copolymer resin, an acrylonitrile-butadiene-styrene-based resin, a polyester-based resin, an amide-based resin, and a silicone rubber.

7. The coating agent according to claim 1, wherein the film-forming resin is at least one kind selected from the groups consisting of a urethane resin, a silicone rubber, and a silicone-urethane copolymer resin.

8. The coating agent according to claim 1, comprising a water dispersion of the silicone rubber particle and an amount of the silicone rubber particle is 5 to 70 % by mass, based on a mass of the water dispersion.

9. The coating agent according to any one of claims 1 to 8, wherein the silicone rubber particles are composed of a silicone rubber having an elongation at break of 15 % or more for a dumb-bell-shaped type 3 test piece as determined according to the test method defined in the Japanese Industrial Standards (JIS) K 6251: 2017, for a 1 mm thick rubber sheet subjected to a heat treatment at 150 °C for 30 minutes, and a tensile strength at break of 0.9 MPa or more as determined according to the test method defined in JIS K 6251: 2017.

10. The coating agent according to any one of claims 1 to 8, wherein the coating agent is for a rubber material.
